**Europäisches Patentamt**

(19) **European Patent Office**

**Office européen des brevets**

(11) Numéro de publication: **0 000 674**
**B1**

(12) **FASCICULE DE BREVET EUROPEEN**

(45) Date de publication du fascicule du brevet: **24.03.82**

(51) Int. Cl.³: **B 01 D 17/04, C 02 F 1/52**

(21) Numéro de dépôt: **78400055.6**

(22) Date de dépôt: **06.07.78**

(54) Procédé de cassage d'émulsions et moyens permettant de mettre en oeuvre ce procédé.

(30) Priorité: **21.07.77 FR 7722426**

(43) Date de publication de la demande:
**07.02.79 Bulletin 79/3**

(45) Mention de la délivrance du brevet:
**24.03.82 Bulletin 82/12**

(84) Etats contractants désignés:
**BE CH DE GB NL SE**

(56) Documents cités:
**BE - A - 625 375**
**DE - A - 2 507 733**
**DE - A - 2 527 987**
**FR - A - 1 539 569**
**FR - A - 2 020 564**
**FR - A - 2 236 793**

(73) Titulaire: **TECHNIME S.A. Société anonyme dite:**
**86, Route de Mantes**
**F-78200 Buchelay (FR)**

(72) Inventeur: **Heidenreich, Johann**
**30 bis avenue Henry Barbusse**
**F-93140 Bondy (FR)**

(74) Mandataire: **Azais, Henri et al,**
**CABINET BEAU DE LOMENIE 55, rue**
**d'Amsterdam**
**F-75008 Paris (FR)**

# Procédé de cassage d'émulsions et moyens permettant de mettre en oeuvre ce procédé

La présente invention concerne un procédé de cassage des émulsions et des suspensions et les moyens permettant de mettre en oeuvre ce procédé. Elle est notamment utile dans le domaine de l'épuration des eaux résiduaires industrielles.

Le principe de l'invention repose sur la formation de micro-cristaux de dérivés d'aluminium au niveau des sites actifs d'une substance adsorbante en particulier une bentonite. Cette formation de micro-cristaux permet de limiter le gonflement de la substance adsorbante dans l'eau.

Dans ce qui suit le terme "émulsion" désigne par commodité non seulement toute émulsion, mais également toute suspension.

Jusqu'à présent, pour le cassage des émulsions, notamment dans le traitement des eaux résiduaires industrielles, on utilisait soit des solutions aqueuses de sels métalliques, soit des poudres.

Les solutions aqueuses de sels métalliques ont l'inconvénient de former, avec la plupart des systèmes émulsionnés, une phase coalescée, c'est-à-dire qu'il se manifeste un phénomène de crémage de la phase dispersée, circonstance qui rend difficile la séparation des phases. De plus, l'utilisation de ces sels métalliques exige toujours une neutralisation de la masse réactionnelle car il y a formation d'acides par hydrolyse. Il existe aussi des systèmes dispersés qui résistent à l'action des sels métalliques et qui ne peuvent, par suite, être séparés.

Les poudres, notamment utilisées pour l'épuration d'eaux résiduaires, et en particulier celles décrites dans les demandes de brevet allemand publiées avant examen DE—A— 2 507 733 et DE—A— 2 527 987, se composent essentiellement de substances adsorbantes et de sels métalliques. Elles présentent de nombreux inconvénients. En particulier, les sels ne doivent pas posséder des propriétés hygroscopiques, ce qui amènerait une réaction prématurée entre les différents constituants des poudres, et aurait pour conséquence une perte de réactivité notable. Les poudres ne sont pas utilisables, dans les procédés fonctionnant en continu, de façon industriellement rentable. En particulier les modalités opératoires données à l'exemple 2 de DE—A—2 507 733 selon lesquelles on met en suspension dans de l'eau (100 l) un mélange de sulfate d'aluminium (12,5 kg) et de kaolin (12,5 kg) puis introduit suspension ainsi formée et un acide dans l'eau résiduaire (10 m$^3$) à épurer, ne permettent de réaliser un traitement en continu dès lors que ledit mélange donne un gel, les sites actifs du kaolin ne présentant pas de micro-cristallisation.

Les poudres soulèvent enfin le problème de formation de poussières avec, dans un grand nombre de cas, le danger de silicose pour le personnel, et leur emploi implique des installations d'un grand encombrement en raison de leur faible solubilité dans la masse réactionnelle.

L'invention a pour but de pallier les inconvénients de l'art antérieur, et de proposer un procédé de cassage des émulsions utile notamment dans le domaine de l'épuration des eaux résiduaires industrielles, qui fait appel à des moyens particuliers, à savoir des réactifs utiles comprenant de l'eau, un acide, des terres actives et un dérivé d'aluminium, les terres actives ayant été traitées de façon que leur gonflement dans l'eau soit limité par la formation de micro-cristaux au niveau de leurs plages actives.

On connait enfin du brevet français FR— A—1 539 569 un procédé de cassage d'emulsions (eaux contenant des gouttelettes d'huile) au moyen d'un réactif basique qui est préparé comme suit: on introduit de l'argile (montmorillonite) dans de l'eau puis on introduit dans le mélange résultant une polyamine et un sel d'aluminium [Al$_2$(SO$_4$)$_3$_].

Selon l'invention on fait appel à un réactif liquide acide qui diffère de l'enseignement du brevet français FR—A—1 539 569 par la nature d'un des ingrédients essentiels, et de celui de DE—A—2 507 733 par le fait que l'acide est introduit dans le réactif liquide au lieu d'être ajouté aux émulsions à traiter.

Le procédé préconisé selon l'invention pour le cassage des émulsions et suspensions au moyen d'eau, d'un acide, d'une substance adsorbante et d'un dérivé d'aluminium sous agitation, est caractérisé en ce que l'on triate, sous agitation, les émulsions et suspensions à épurer, au moyen d'un réactif liquide constitué par les solutions et dispersions aqueuses comprenant:

— de l'eau,
— un acide,
— une substance adsorbante, et
— un dérivé d'aluminium,

ledit réactif étant obtenu à partir de quatre ingrédients essentiels en introduisant dans l'acide dilué avec de l'eau, la substance adsorbante puis un dérivé d'aluminium, notamment AlCl$_3$, Al$_2$O$_3$ ou Al(OH)$_3$, de façon que des micro-cristaux de dérivés d'aluminium soient associés aux sites actifs de la substance adsorbante.

Selon une variante de ce procédé le réactif peut être préparé en remplaçant le dérivé d'aluminium par de l'aluminium métallique. Le réactif liquide ainsi obtenu contient alors un sel d'aluminium.

De façon avantageuse, on préconise d'utiliser une partie en poids d'un réactif selon l'invention pour 2 à 6 parties en poids d'huile émulsionnée. D'une manière générale, on utilisera 0,5 à 8 kg de réactif selon l'invention pour 1 m³ d'émulsion ou de suspension; à l'intérieur de cette fourchette la quantité de réactif utilisée sera fonction de la nature de l'émulsion ou de la suspension à traiter.

Parmi les substances adsorbantes qui conviennent, on peut notamment mentionner les bentonites et les terres actives telles que les terres argileuses et les terres alcalino-terreuses. Bien entendu, il est possible d'utiliser des mélanges desdites substances.

Les substances adsorbantes qui conviennent sont principalement remarquables par leur capacité d'échange d'ions et comportent des plages ou sites actifs. Ces plages ou sites provoquent, selon l'invention, la formation de micro-cristaux, par une concentration locale des sels métalliques en solution aqueuse, à partir d'une concentration limite qui reste encore inférieure à la concentration de saturation. D'un autre côté, il existe une valeur de seuil, avec une dilution progressive du réactif dans la masse réactionnelle, les forces de cohésion entre la terre porteuse et les micro-cristaux seront progressivement réduites au fur et à mesure que les sels cristallisés passent en solution. De cette manière, les terres actives se régénèrent et regagnent leur pouvoir d'adsorption afin de pouvoir agir sur la phase dispersée comme agents de coagulation.

Les substances adsorbantes préférées selon l'invention sont les bentonites, notamment les bentonites sodique, calcique et magnésienne, éventuellement en association avec une autre terre active.

Afin d'illustrer le caractère très spécifique des réactifs préconisés selon l'invention on a effectué des essais comparatifs en ce qui concerne le pouvoir gonflant des terres actives habituellement utilisées selon les techniques antérieurement connues, et des mêmes terres actives préparées selon l'invention. Ces essais ont été résumés ci-après.

Pour disposer d'une dispersion suffisamment fluide on réalise une suspension (A) de 7,5 parties en poids de bentonite sodique dans 92,5 parties en poids d'un mélange constitué de CaCl₂ (1 partie en poids), de MgCl₂ (1 partie en poids), d'hydrate d'alumine (1 partie en poids) et d'eau distillée (89,5 parties en poids), et, une suspension (B) obtenue par dispersion dans 62,5 parties en poids d'eau distillée, de 37,5 parties en poids du réactif de l'exemple 6 selon l'invention, la suspension B comprenant 15 parties en poids de la bentonite sodique entrant dans la suspension A. On mesure la viscosité de A et de B au moyen d'une coupe consistométrique ayant un diamètre de 2,5 mm d'ouverture d'écoulement selon la norme française AFNOR NF—T—30—014.

Pou la moyenne de trois essais on a les valeurs suivantes:

A: temps d'écoulement: 47 s
   viscosité: 17×10⁻³ Pa . s

B: temps d'écoulement: 33 s
   viscosité: 6×10⁻³ Pa . s.

Ainsi B qui renferme deux fois plus de bentonite sodique que A a une viscosité qui est environ 3 fois inférieure à celle de A.

Les sels dissous modifient l'état des charges électriques dans la masse réactionnelle et contribuent à la coagulation de la phase dispersée.

La résultante des actions des terres adsorbantes et des sels permet le cassage des émulsions et contribue à l'épuration des eaux résiduaires industrielles.

La présence d'une bentonite ou d'une autre terre active empêche toute fuite de chlorure d'aluminium gazeux à l'extérieur du mélange: le gaz se solidifie sur les plages actives de la terre et forme les micro-cristaux mentionnés à-dessus.

Outre la terre adsorbante et le dérivé d'aluminium (obtenu à partir notamment de l'aluminium métallique, AlCl₃, Al₂O₃ ou Al(OH)₃), le réactif selon l'invention peut comporter d'autres métaux ou d'autres sels métalliques. Parmi les sels métalliques, on peut notamment mentionner le chlorure ferrique, le chlorure de calcium, le chlorure de magnésium, etc. Ces sels offrent l'avantage d'adapter le réactif aux types d'eaux résiduaires industrielles. Dans le même ordre d'idées, on peut traiter la terre active avec de l'acide sulfamique pour obtenir un réactif applicable aux eaux polluées par les nitrites.

D'autres avantages et caractéristiques de l'invention seront mieux compris à la lecture qui va suivre d'exemples de préparation nullement limitatifs des réactifs et des exemples également non limitatifs d'utilisation desdits réactifs.

Exemple 1
Préparation d'un réactif acide
Formulation:

| | |
|---|---|
| acide chlorhydrique (d₄¹⁵=1,19) | 290 g |
| bentonite Na ou Ca | 500 g |
| aluminium métallique | 10 g |
| chlorure de fer en solution aqueuse à 20% (200 g/l) | 200 g |
| eau | 1 kg |

Remplir le réacteur avec l'acide chlorhydrique, diluer jusqu'à 25% environ avec de l'eau, ajouter la bentonite, agiter à l'homogénéite; ajouter au sein de la masse réactionnelle l'aluminium, agiter jusqu'à la fin de la réaction; ajouter le chlorure de fer, agiter à l'homogénéité; compléter enfin avec de l'eau jusqu'à une quantité de 1 kg d'eau.

Exemple 2
Préparation d'un réactif acide tamponné
Formulation:

| | |
|---|---|
| acide chlorhydrique (d₄¹⁵=1,19) | 290 g |
| bentonite Na ou Ca | 500 g |
| aluminium métallique | 10 g |

| FeCl₃ en solution aqueuse à 20% | 100 g |
|---|---|
| (200 g/l) | |
| CaCl₂ en solution aqueuse à 30% | 50 g |
| (300 g/l) | |
| MgCl₂ en solution aqueuse à 30% | 50 g |
| (300 g/l) | |
| Eau | 1 kg |

Remplir le réacteur avec : l'acide chlorhydrique, diluer avec de l'eau jusqu'à 25% environ, ajouter la bentonite, agiter à l'homogénéité; ajouter à la masse réactionnelle l'aluminium, agiter jusqu'à la fin de la réaction; ajouter successivement le chlorure de fer, le chlorure de calcium et le chlorure de magnésium, agiter à l'homogénéité; laisser refroidir; compléter enfin avec de l'eau jusqu'à une quantité de 1 kg d'eau.

Exemple 3
Préparation d'un réactif acide
Formulation:

| acide chlorhydrique ($d_4^{15}$=1,19) | 290 g |
|---|---|
| bentonite Na ou Ca | 400 g |
| alumine | 100 g |
| aluminium métallique | 20 g |
| FeCl₃ en solution aqueuse à 20% | 200 g |
| (200 g/l) | |
| Eau | 1 kg |

Remplir le réacteur avec l'acide chlorhydrique, diluer avec de l'eau jusqu'à 25% environ, ajouter la bentonite et l'alumine, agiter à l'homogénéité; ajouter à la masse réactionnelle l'aluminium, agiter jusqu'à la fin de la réaction; ajouter le chlorure de fer, agiter à homogénéité; laisser refroidir; ajouter enfin l'eau restante.

Exemple 4
Préparation d'un réactif acide tamponné
Formulation:

| acide chlorhydrique ($d_4^{15}$=1,19) | 290 g |
|---|---|
| bentonite Na ou Ca | 350 g |
| argile | 50 g |
| alumine | 100 g |
| alumine métallique | 10 g |
| FeCl₃ en solution aqueuse à 20% | 100 g |
| CaCl₂ en solution aqueuse à 30% | 100 g |
| eau | 1 kg |

Remplir le réacteur avec l'acide chlorhydrique, diluer avec de l'eau comme indiqué ci-dessus, ajouter la bentonite, l'argile et l'alumine, agiter à l'homogénéité; ajouter à la masse réactionnelle l'aluminium; agiter jusqu'à la fin de la réaction; ajouter successivement le chlorure de fer et le chlorure de calcium, agiter à homogénéité; laisser refroidir; ajouter enfin l'eau restante.

Exemple 5
Préparation d'un réactif réducteur de nitrite
Formulation:

| acide sulfamique en solution aqueuse | 480 g |
|---|---|
| à 25% (250 g/l) | |

| bentonite Na | 480 g |
|---|---|
| AlCl₃ en solution aqueuse à 15% | 40 g |
| (150 g/l) | |
| eau | 1 kg |

Remplir le réacteur avec l'acide sulfamique, ajouter la bentonite, agiter à homogénéité; ajouter le chlorure d'aluminium; agiter à homogénéité.

Exemple 6
Préparation d'un réactif acide
Formulation:

| acide chlorhydrique ($d_4^{15}$=1,19) | 80 g |
|---|---|
| bentonite Na | 400 g |
| hydrate d'alumine | 50 g |
| CaCl₂ | 130 g |
| MgCl₂ | 90 g |
| eau distillée | 250 g |

Le réactif est préparé selon les modalités données à l'exemple 4 en ce qui concerne l'ordre d'introduction des ingrédients. Ce réactif est dilué avec de l'eau au moment de l'emploi, par exemple comme indiqué ci-dessus pour l'obtention de la suspension B.

Les exemples 7 à 10 qui suivent ont trait à l'application selon l'invention des réactifs décrits ci-dessus:

Exemple 7
Cet exemple concerne le cassage d'une émulsion de coupe à base d'huiles minérales ayant un pH initial de 10.

Ajouter à l'émulsion à casser la quantité de réactif acide selon l'exemple 1 ou 3, nécessaire pour effectuer le cassage (1 partie en poids de réactif pour 4 parties en poids d'huile en émulsion), agiter vivement; le cassage se produit dans un laps de temps de 3 à 5 secondes; réduire la vitesse d'agitation afin qu'un bloc puisse se former; ajouter si nécessaire 5 à 10 grammes par m³ de la masse réactionnelle d'un polyélectrolyte convenable pour assister la floculation; séparer les phases par filtration et/ou décantation.

Exemple 8
Cet exemple concerne le cassage d'une émulsion de rectification à base d'huiles synthétiques à dispersion ultra-fine dans la phase continue de pH initial 8,5.

Ajouter à l'émulsion à casser la quantité de réactif acide tamponné selon l'exemple 2 ou 4, nécessaire pour effectuer le cassage (1 partie en poids de réactif pour 4 parties en poids d'émulsion), le cassage se produit dans un laps de temps de 3 à 5 secondes; réduire la vitesse d'agitation afin qu'un bloc puisse se former; ajouter, si nécessaire, 5 à 10 grammes par m³ de la masse réactionnelle d'un polyélectrolyte convenable pour assister la floculation; séparer les phases par filtration et/ou décantation.

Exemple 9
Cet exemple concerne le cassage d'une émulsion de tréfilage à base d'huiles semi-synthétiques et de substances savonneuses de pH initial 9,5.

Ajouter à l'émulsion la quantité de réactif tamponné selon l'exemple 2 ou 4 nécessaire pour un bon cassage et pour transformation des substances savonneuses solubles dans l'eau aux savons calcaires. Procéder ensuite comme indiqué à l'exemple 7 ou 8.

Exemple 10

Cet exemple concerne le traitement d'une émulsion de rectification à base d'huiles synthétiques et de nitrites de pH 7,5 au moyen du réactif de l'exemple 5.

Ajouter à l'émulsion à traiter la quantité de réactif réducteur de nitrite afin d'avoir un pH de 3,5 à 4; après 10 secondes, ajouter à la masse réactionnelle une base jusqu'à l'obtention d'un pH de 7 à 8; procéder ensuite comme indiqué aux exemples 7 ou 8. Les boues que l'on recueille par décantation dans les exemples 7 à 10 peuvent être séchées selon une méthode connue en soi, notamment au moyen d'un filtre-presse ou d'une centrifugeuse-décanteuse.

L'objet de l'invention, à savoir le cassage des émulsions et des suspensions, s'applique avantageusement dans le traitement des émulsions huileuses et des eaux résiduaires. En particulier, les réactifs selon l'invention se sont révélés très efficaces dans le traitement des eaux résiduaires des mégisseries, des tanneries, des abattoirs, des industries alimentaires, de l'industrie cosmétologique, des industries des peintures, des papiers, des textiles, des teintureries et blanchisseries industrielles.

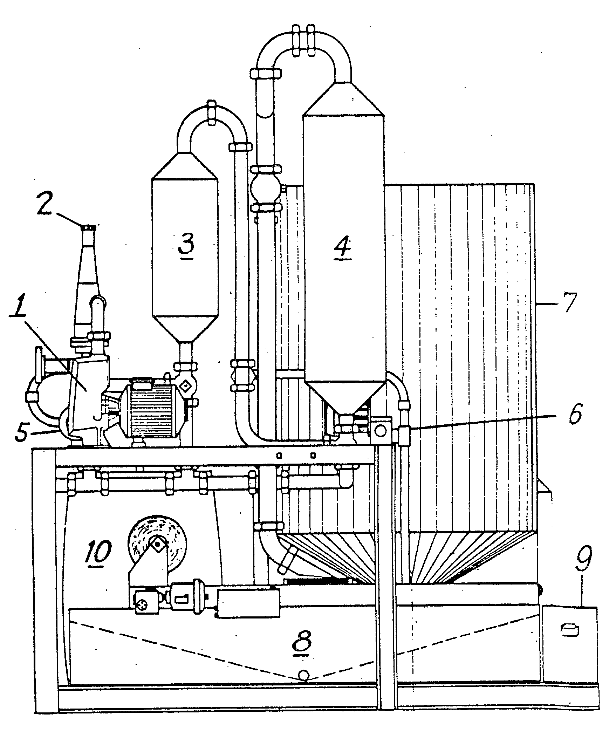

Dans la figure unique donnée ci-après, on a donné le schéma d'une installation mobile permettant de traiter en continu 5 à 10 m³/h d'eaux résiduaires industrielles. Une telle installation, qui peut être montée sur un camion ou une remorque pour traiter les eaux résiduaires des diverses industries à raison d'une à plusieurs heures par semaine ou par mois, comprend une pompe à amorçage automatique (1), une chambre (2) faisant office de réacteur primaire de cassage, une seconde chambre (3) faisant office de réacteur secondaire de cassage, un réacteur (4) de floculation, une pompe (5) pour le dosage du réactif selon l'invention, une pompe (6) pour le dosage du floculant, un récipient (7) servant de réservoir de floculant, un filtre (8) permettant la séparation automatique de l'eau épurée des boues, un réceptable (9) pour recueillir les boues et un récipient (10) servant de réservoir pour le réactif de cassage selon l'invention.

De façon avantageuse, le réacteur primaire de cassage (2) peut être un dispositif du type "cyclöne".

**Revendications**

1. Procédé de cassage des émulsions et des suspensions, au moyen d'eau, d'un acide, d'une substance adsorbante et d'un dérivé d'aluminium sous agitation, ledit procédé, qui est notamment utile dans l'épuration des eaux résiduaires industrielles, étant caractérisé en ce que l'on traite sous agitation les émulsions et les suspensions à épurer, au moyen d'un réactif liquide constitué par les solutions ou dispersions aqueuses comprenant:

— de l'eau
— un acide,
— une substance adsorbante, et
— un dérivé d'aluminium,

ledit réactif liquide étant obtenu à partir de ces quatre ingrédients essentiels en introduisant, dans l'acide dilué avec de l'eau, la substance adsorbante puis le dérivé d'aluminium de façon que des micro-cristaux de dérivé d'aluminium soient associés aux sites actifs de la substance adsorbante.

2. Procédé selon la revendication 1, caractérisé en ce que le dérivé d'aluminium est choisi parmi $AlCl_3$, $Al_2O_3$ et $Al(OH)_3$.

3. Procédé selon la revendication 1, caractérisé en ce que la substance adsorbante est choisie parmi les bentonites, les terres argileuses, les terres alcalino-terreuses et leurs mélanges.

4. Procédé selon la revendication 1, caractérisé en ce que la substance adsorbante est la bentonite de sodium ou la bentonite de calcium.

5. Procédé selon la revendication 1, caractérisé en ce que le réactif liquide est tamponné.

6. Procédé selon la revendication 1, caractérisé en ce que l'acide est choisi parmi les acides chlorhydrique et sulfamique.

7. Procédé selon la revendication 1, caractérisé en ce que le réactif est utilisé à raison de 0,5 à 8 kg de réactif pour 1 m³ d'émulsion ou suspension à traiter.

8. Procédé de cassage des émulsions et des suspensions au moyen d'eau, d'un acide, d'une substance adsorbante et d'un sel d'aluminium sous agitation, ledit procédé, qui est notamment utile dans le domaine de l'épuration des eaux résiduaires industrielles, étant caractérisé en ce que l'on traite sous agitation les émulsions et les suspensions à épurer, au moyen d'un réactif liquide constitué par les solutions ou dispersions aqueuses comprenant:

— de l'eau,
— un acide,
— une substance adsorbante, et
— un sel d'aluminium,

ledit réactif étant obtenu à partir de quatre ingrédients essentiels en introduisant dans l'acide dilué avec de l'eau, la substance adsorbante puis de l'aluminium métallique, de façon que des micro-cristaux de sel d'aluminium soient associés aux sites actifs de la substance adsorbante.

**Patentansprüche**

1. Verfahren zum Brechen von Emulsionen und Dispersionen mit Hilfe einer aus Wasser, einer Säure, einer adsorbierenden Substanz und einem Aluminiumderivat bestehenden Zusammensetzung unter Rührung, das insbesondere bei der Reinigung von Industrieabwässern verwendbar ist, dadurch gekennzeichnet, dass man die zu reinigenden Emulsionen und Suspensionen mit einem aus wässerigen Lösungen oder Dispersionen bestehenden und

— Wasser,
— eine Säure,
— eine adsorbierende Substanz und
— ein Aluminiumsalz

enthaltenden flüssigen Reagens unter Rührung behandelt, wobei dieses flüssige Reagens von diesen vier wesentlichen Bestandteilen hergestellt wird, indem in die mit Wasser verdünnte Säure die adsorbierende Substanz und dann das Aluminiumderivat eingeführt werden, derart, dass Mikrokristalle des Aluminiumderivates an die Aktivstellen der adsorbierenden Substanz gebunden werden.

2. Verfahren nach Anspruch 1, dadurch gekennzeichnet, dass das Aluminiumderivate aus AlCl$_3$, Al$_2$O$_3$ und Al(OH)$_3$ ausgewählt wird.

3. Verfahren nach Anspruch 1, dadurch gekennzeichnet, dass die adsorbierende Substanz aus den Bentoniten, den tonhaltigen Erden, den erdalkalischen Erden und Gemischen davon ausgewählt wird.

4. Verfahren nach Anspruch 1, dadurch gekennzeichnet, dass die adsorbierende Substanz aus Natrium- und Kalzium- bentonit ausgewählt wird.

5. Verfahren nach Anspruch 1, dadurch gekennzeichnet, dass das flüssige Reagens gepuffert wird.

6. Verfahren nach Anspruch 1, dadurch gekennzeichnet, dass die Säure aus Salzsäure und Sulfaminsäure gewählt wird.

7. Verfahren nach Anspruch 1, dadurch gekennzeichnet, dass man das flüssige Reagens in einer Menge von 0,5 bis 8 kg pro m$^3$ zu behandelnder Emulsion oder Suspension einsetzt.

8. Verfahren zum Brechen von Emulsionen und Dispersionen mit Hilfe einer aus Wasser, einer Säure, einer adsorbierenden Substanz und einem Aluminiumsalz bestehenden Zusammensetzung unter Rührung, das insbesondere bei der Reinigung von Industrieabwässern verwendbar ist, dadurch gekennzeichnet, dass man die zu reinigenden Emulsionen und Suspensionen mit einem aus wässerigen Lösungen oder Dispersionen bestehenden und

— Wasser,
— eine Säure,
— eine adsorbierende Substanz und
— ein Aluminiumderivat

enthaltenden flüssigen Reagens unter Rührung behandelt, wobei dieses flüssige Reagens von vier wesentlichen Bestandteilen hergestellt wird, indem in die mit Wasser verdünnte Säure die adsorbierende Substanz und dann Aluminiummetall eingefürht werden, derart, dass Mikrokristalle von Aluminiumsalz an die Aktivstellen der adsorbierenden Substanz gebunden werden.

**Claims**

1. A process for breaking emulsions and suspensions by means of water, an acid, an adsorbent substance and an aluminium derivative, under stirring, said process which is useful more particularly in the purification of industrial sewage, being characterized in that emulsions and suspensions to be treated are treated, under stirring, by means of a liquid reagent chosen from the aqueous solutions or dispersions comprising

— water,
— an acid,
— an adsorbent substance, and
— an aluminium derivative,

said liquid reagent being obtained from these four essential ingredients by introducing, into the acid diluted with water, the adsorbent substance and then the aluminium derivative, in such a manner that microcrystals of aluminium derivative are associated with the active sites of the adsorbent substance.

2. A process according to claim 1, characterized in that the aluminium derivative is chosen from AlCl$_3$, Al$_2$O$_3$ and Al(OH)$_3$.

3. A process according to claim 1, characterized in that the adsorbent substance is chosen from bentonites, argillaceous earths, alkaline earths and their mixtures.

4. A process according to claim 1, characterized in that the adsorbent substance is sodium or calcium bentonite.

5. A process according to claim 1, characterized in that the liquid reagent is buffered.

6. A process according to claim 1, characterized in that the acid is chosen from hydrochloric acid and sulphamic acid.

7. A process according to claim 1, characterized in that the liquid reagent is used in a proportion of 0.5 to 8 kg of reagent per 1 m$^3$ of emulsion or suspension to be treated.

8. A process for breaking emulsions and suspensions by means of water, an acid, an adsorbent substance and an aluminium salt, under stirring, said process, which is useful more particularly in the purification of industrial sewage, being characterized in that emulsions and suspensions to be treated are treated, under stirring, by means of a liquid reagent chosen from the aqueous solutions or dispersions comprising

— water,
— an acid,
— an adsorbent substance, and
— an aluminium salt,

said liquid reagent being obtained from essential ingredients by introducing, into the acid diluted with water, the adsorbent substance and then metallic aluminium, in such a manner that microcrystals of aluminium salt are associated with the active sites of the adsorbent substance.